(19) Europäisches Patentamt
European Patent Office
Office européen des brevets

(11) **EP 2 787 330 B1**

(12) **EUROPÄISCHE PATENTSCHRIFT**

(45) Veröffentlichungstag und Bekanntmachung des Hinweises auf die Patenterteilung:
**31.01.2018   Patentblatt 2018/05**

(51) Int Cl.:
*G01G 19/08* (2006.01)     *G01M 1/12* (2006.01)

(21) Anmeldenummer: **14163300.8**

(22) Anmeldetag: **03.04.2014**

(54) **Wiegesystem und Verfahren zum Wiegen einer Ladung eines Kippsattelzugs**

Weighing system and method for weighing a load of an articulated tipper vehicle

Système de pesage et procédé destiné à peser un chargement d'un train routier basculant

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2013   DE 102013103312**

(43) Veröffentlichungstag der Anmeldung:
**08.10.2014   Patentblatt 2014/41**

(73) Patentinhaber:
• **Schmitz Cargobull Gotha GmbH**
  **99867 Gotha (DE)**
• **KNORR-BREMSE Systeme für Nutzfahrzeuge GmbH**
  **80809 München (DE)**

(72) Erfinder:
• **Eberle, Reinhard**
  **89155 Erbach (DE)**
• **Hey, Jeffrey**
  **99867 Gotha (DE)**
• **Flach, Oskar**
  **35037 Marburg (DE)**
• **Mederer, Martin**
  **92318 Neumarkt-Rittershof (DE)**
• **Bühling, Simon**
  **80796 München (DE)**
• **Fry, Matthew**
  **Bristol, Bristol BS48 1PP (GB)**
• **Andrews, Tim**
  **Bristol, Bristol BS30 5WB (GB)**

(74) Vertreter: **Baur & Weber Patentanwälte PartG mbB**
**Rosengasse 13**
**89073 Ulm (DE)**

(56) Entgegenhaltungen:
**EP-A1- 2 527 541     WO-A1-2009/156726**
**DE-A1- 3 629 244**

**Beschreibung**

Die Erfindung betrifft ein Wiegesystem sowie ein Verfahren zum Wiegen einer Ladung eines Kippsattelzugs, insbesondere eines mit Schüttgut beladenen Kippsattelzugs.

Aus dem allgemeinen Stand der Technik sind Kippsattelzüge bekannt, die insbesondere als Baustellenfahrzeuge häufig lose Materialien, wie z. B. Sand, Kies oder Erdreich, als Schüttgut transportieren und an Baustellen liefern. Üblicherweise wird diese Ladung in einer Kiesgrube, einer Sandgrube oder bei einem Baustoffhändler auf den Kippsattelzug geladen und anschließend an die Baustelle transportiert. Dabei ist es üblich, dass die Kosten über das Ladungsgewicht verrechnet werden. Dazu wird der Kippsattelzug vor der Beladung auf eine Waage gefahren, so dass sein Leergewicht bestimmt werden kann. Nach dem Befüllen des Kippsattelzugs muss die Fahrerin oder der Fahrer des Kippsattelzugs erneut zur Wiegestation fahren, so dass das Ladungsgewicht nach Subtraktion des Leergewichts bestimmt werden kann.

Das mehrmalige Anfahren der Wiegestation führt jedoch zu einem Zeitverlust beim Beladen des Kippsattelzugs, der noch zusätzlich verstärkt werden kann, wenn sich mehrere Fahrzeuge zum Beladen eingefunden haben.

Folglich besteht in der Technik ein Bedarf, eine Alternative zu den gängigen, fest installierten Wiegestationen zu schaffen.

Aus der US 2010/0211356 A1 ist eine Vorrichtung zur Gewichtsbestimmung für ein Baustellenfahrzeug gezeigt. Das Baustellenfahrzeug weist zylindrische Federelemente auf, die mit Drucksensoren verbunden sind, so dass aus dem Druck im Inneren der Stoßdämpfer ein Ladungsgewicht bestimmt werden kann.

In der WO 2009/156726 A1 wird ein Ladungsüberwachungssystem beschrieben, bei dem Ladung in Form eines Containers mittels eines fahrzeugeigenen Aufnahmesystems auf die Ladefläche gebracht werden kann. Das Aufnahmesystem weist mehrere Sensoren auf, die die Position bzw. Kraft der Ladung während des Beladens registrieren können.

In der DE 36 29 244 A1 werden ein Verfahren und eine Vorrichtung zur Bestimmung des Gewichts bzw. der räumlichen Schwerpunktlage von Containern beschrieben. Dabei wird eine erste Messung durchgeführt, bei der an den Anschlagpunkten auftretende Zug- oder Druckkräfte gemessen werden. Nachfolgend wird der Container aus der Ausgangslage um einen definierten Winkel verkippt, um in einer zweiten Messung an den Anschlagpunkten des verkippten Containers auftretende Zug- oder Druckkräfte zu messen. Aus den ermittelten Werten lässt sich das Gewicht des Containers errechnen.

Aus dem allgemeinen Stand der Technik sind darüber hinaus Wiegeeinrichtungen bekannt, bei der an jeder Position, an der eine Kippmulde auf einem Auflieger aufliegt, eine Messplatte vorgesehen ist; die den Aufliegedruck bestimmt.

Die bisher bekannten in Fahrzeuge integrierbaren Systeme zur Gewichtsbestimmung reichen jedoch in ihrer Genauigkeit nicht an die der fest installierten Wiegeeinrichtungen heran.

Es ist daher Aufgabe der Erfindung, ein Wiegesystem anzugeben bzw. ein Verfahren zum Wiegen einer Ladung eines Kippsattelzugs zu schaffen, die zum einen in einem Kippsattelzug integrierbar sind und zum anderen eine Präzision der Gewichtsbestimmung erreichen, die mit fest installierten Wiegesystemen vergleichbar ist. Diese Aufgabe wird durch die Merkmale der unabhängigen Patentansprüche gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Demgemäß wird ein Wiegesystem für eine Ladung eines Kippsattelzugs geschaffen, die eine erste Sensoreinheit, die geeignet ist, einen Aufstellwinkel einer Kippanordnung eines Kippsattelaufliegers zu bestimmen, eine zweite Sensoreinheit, die geeignet ist, eine Aufrichtkraft beim Aufstellen der Kippanordnung zu bestimmen, eine dritte Sensoreinheit, die geeignet ist, den Luftdruck der Luftdruckfederung zu bestimmen, und eine Steuereinheit umfasst, die geeignet ist, aus dem Aufstellwinkel, der Aufrichtkraft und dem Luftdruck der Lufdruckfederung in einer aufgestellten Position und in einer aufliegenden Position der Kippanordnung einen Wert zu bestimmen, der einem Gewicht einer Ladung in der Kippanordnung entspricht.

In einer Ausführungsform der Erfindung entspricht die aufgestellte Position einem Aufstellwinkel von weniger als 10°, vorzugsweise weniger als 5°.

In der Erfindung ist die erste Sensoreinheit ein Winkelsensor oder eine Beschleunigungssensor.

Ein Winkelsensor lässt sich zwischen Kippaufbau und Chassis des Kippfahrzeugs anbringen, so dass ohne große konstruktive Maßnahmen eine einfache und zuverlässige Messung des Kippwinkels erfolgt. Der Winkelsensor kann das Kippen des Kippaufbaus beispielsweise über ein Potentiometer in ein elektrisches Signal umsetzen. Alternativ wird ein Beschleunigungssensor an dem Kippaufbau angebracht, so dass aus den gemessenen Beschleunigungswerten auf die aktuelle Position und damit den Kippwinkel des Kippaufbaus zurückgeschlossen werden kann.

In der Erfindung ist die zweite Sensoreinheit ein Drucksensor, der den Hydraulikdruck innerhalb einer Teleskopvorrichtung zum Ankippen der Kippanordnung angibt.

Der Druck im Inneren der zum Kippen bereitgestellten Teleskopeinrichtung kann auf einfache Weise zur Bestimmung einer hydraulischen Kraftkomponente herangezogen werden.

In der Erfindung umfasst die dritte Sensoreinheit ein oder mehrere Luftdrucksensoren, die den Luftdruck innerhalb einer oder mehrerer Achsen einer Luftdruckfeder des Kippsattelaufliegers messen.

Viele Kippfahrzeuge, insbesondere Kippsattelanhänger, werden heutzutage mit einer Luftfederung ausgestattet, die über ein Erhöhen oder Erniedrigen des Luftdrucks in der Luftfederung auf unterschiedliche Beladezustände angepasst werden kann. Beispielsweise sind Luftfederungen üblich, die mit einem Druck bis zu 10 bar, typischerweise etwa 6 bar befüllt werden. Um die Befüllung der Luftfederung kontrollieren zu können, ist ein entsprechender Drucksensor vorgesehen, der als Messeinrichtung verwendet werden kann, so dass das Ausgangssignal des Drucksensors der Sensoreinrichtung zur Verfügung steht. Folglich ist es möglich, über die Messwerte der einzelnen pneumatischen Elemente der Luftfederung Gewichtskräfte des Kippaufbaus und daraus einen Schwerpunk zu bestimmen, ohne zusätzliche Sensormittel bereitstellen zu müssen, da die bereits ohnehin vorhandenen Drucksensoren der Luftfederung verwendet werden.

In einer weiteren Ausführungsform der Erfindung nimmt die dritte Sensoreinheit eine Schwerpunktbestimmung über ein Erfassungsmittel zur Bestimmung der Ladungsverteilung vor.

Die oben beschriebene, mit der Luftfederung verbundene Sensoreinheit erlaubt eine Schwerpunktbestimmung der Ladung im Kippsattelauflieger. Eine Schwerpunktbestimmung ist jedoch auch möglich, wenn die Ladungsverteilung beispielsweise über eine Kamera erfasst wird, so dass aus der bekannten Geometrie der Kippmulde eine entsprechende Berechnung erfolgen kann. Diese ist beispielsweise für homogenes Ladungsgut oder auch für Flüssigkeiten denkbar, deren Gewichtverteilung über eine Einfüllhöhe oder eine einfache Oberflächenprofilbestimmung bestimmt werden kann.

In einer weiteren Ausführungsform der Erfindung ist der Hydraulikdruck innerhalb der Teleskopvorrichtung zum Aufstellen der Kippanordnung mit einer Genauigkeit von 1 bar oder höher bestimmbar.

In einer weiteren Ausführungsform der Erfindung ist der pneumatische Druck mit einer Genauigkeit von 0,1 bar oder höher bestimmbar.

In einer weiteren Ausführungsform der Erfindung ist eine weitere Sensoreinheit vorgesehen, die eine Neigung des Kippsattelaufliegers bezüglich einer Fahrbahn bestimmt.

Die Bestimmung des Ladungsgewichts wie bisher beschrieben setzt eine im Wesentlichen ebene Unterlage voraus. Gemäß dieser Ausführungsform wird das Konzept auf einen geneigten Kippsattelauflieger erweitert, wobei die Sensoreinheit eine Seitenneigung, eine Neigung in Längsrichtung oder beides bestimmen kann.

In einer weiteren Ausführungsform der Erfindung ist das Wiegesystem mit einem Datenaufzeichnungsgerät verbunden, das die Werte der Sensoreinheiten und/oder der Steuereinheit aufzeichnet.

Das Aufzeichnen der gemessenen Werte kann zu Dokumentationszwecken herangezogen werden. Es ist aber auch möglich, dass das Datenaufzeichnungsgerät bei Verlassen einer Kiesgrube, einer Sandgrube oder ähnlichem ausgelesen wird, so dass das Ladungsgewicht für weitere Schritte, wie z.B. ein Abrechnen mit einem Fuhrunternehmen, herangezogen wird.

In einer weiteren Ausführungsform der Erfindung ist das Wiegesystem mit einer Funkschnittstelle verbunden, die geeignet ist, die Werte der Sensoreinheiten und/oder der Steuereinheit weiterzuleiten.

Demgemäß ist auch eine Fernüberwachung des Sattelzuges bzw. des Kippsattelaufliegers beispielsweise durch ein Fuhrparkunternehmen möglich. Die Weiterleitung der Daten aus der Steuereinheit kann wiederum zu Dokumentationszwecken herangezogen werden, wobei insbesondere auch eine spätere Abrechnung ohne Anfahren einer festen Wiegestation möglich ist.

In einer weiteren Ausführungsform der Erfindung ist die Funkschnittstelle nach einem Mobilfunkstandard, vorzugsweise einem GSM-Standard oder einem UMTS-Standard oder einem LTE-Standard ausgeführt.

Dies ermöglicht, die gemessenen Werte beispielsweise an ein Mobiltelefon weiter zu leiten, so dass die Fahrerin oder der Fahrer des Sattelzuges bereits vor Ort die entsprechenden Informationen zur Verfügung hat, so dass über eine Anzeige auf dem Mobiltelefon beispielsweise auf ein Untergewicht der Ladung oder eine Überladung des Sattelzugs eine Reaktion der Fahrerin oder des Fahrers erfolgen kann.

In einer weiteren Ausführungsform der Erfindung ist das Wiegesystem mit einer Ausgabeeinheit, vorzugsweise einem Drucker verbunden ist, die geeignet ist, die Werte der Sensoreinheiten und/oder der Steuereinheit auszugeben.

Dies ermöglicht die komfortable Abrechnung beziehungsweise Dokumentation beim Beladen des Sattelzuges.

Außerdem wird ein Verfahren zum Wiegen einer Ladung eines Kippsattelzugs, insbesondere eines mit Schüttgut beladenen Kippsattelzugs, angeben, bei dem folgende Schritte ausgeführt werden:

- Bereitstellen eines Kippsattelaufliegers, der Mittel zur Bestimmung eines Aufstellwinkels einer Kippanordnung des Kippsattelaufliegers, zur Bestimmung einer Aufrichtkraft beim Aufstellen der Kippanordnung und zur Bestimmung eines Schwerpunkts der Kippanordnung umfasst,

- Beladen der Kippanordnung mit einer Ladung;

- Aufstellen der Kippanordnung um den Aufstellwinkel und Bestimmen der Aufrichtkraft und des Schwerpunkt in der aufgestellten Position;

- Ausgeben eines Werts, der einem Gewicht einer Ladung in der Kippanordnung entspricht.

In einer Ausführungsform des Verfahrens werden vor dem Beladen der Kippanordnung die Schritte Aufstellen der Kippanordnung und Ablegen der Kippanordnung durchgeführt, um aus den jeweiligen Werten der Sensoreinheiten ein Leergewicht der Kippanordnung zu bestimmen.

In einer weiteren Ausführungsform des Verfahrens werden nach einem teilweisen Entladen der Kippanordnung die Schritte Aufstellen der Kippanordnung und Ablegen der Kippanordnung durchgeführt, um aus den jeweiligen Werten der Sensoreinheiten ein Differenzgewicht der Kippanordnung zu bestimmen.

In einer weiteren Ausführungsform des Verfahrens umfasst das Mittel zur Bestimmung eines Schwerpunkts der Kippanordnung einen oder mehrere pneumatische Sensoren einer Luftfederung.

In einer weiteren Ausführungsform des Verfahrens nimmt das Mittel zur Bestimmung eines Schwerpunkts der Kippanordnung eine Erfassung der Ladungsverteilung vor. Das Verfahren umfasst zur Bestimmung einer Aufrichtkraft beim Aufstellen der Kippanordnung einen hydraulischen Drucksensor einer Teleskopvorrichtung. Das Verfahren umfasst zur Bestimmung eines Aufstellwinkels einen Winkelsensor oder einen Beschleunigungssensor.

Außerdem wird ein Kippsattelanhänger angegeben, der ein oben beschriebenes Wiegesystem aufweist.

Das beschriebene Verfahren sowie die vorteilhaften Ausgestaltungen können in einer Steuereinheit eines Kippsattelanhängers oder einer Steuereinheit eines Fahrzeugs mit Kippsattelanhänger vorgesehen sein. Dazu wird ein Mikroprozessor oder dergleichen mit einem entsprechenden Programm geladen. Das Programm kann derart beschaffen sein, dass es die hier beschriebenen Verfahren verkörpert bzw. auszuführen imstande ist, sodass der Mikroprozessor die Schritte solcher Verfahren ausführen kann und damit über die Steuereinheit die beschriebenen Mittel des Kippfahrzeugs auslesen und den das Gewicht einer Ladung repräsentierenden Wert ausgeben kann.

Schließlich wird ein computerlesbares Medium angegeben, auf dem Befehle abgespeichert sind, die es einem oder mehreren Rechnern oder Mikroprozessoren ermöglichen, ein oben beschriebenes Verfahren auszuführen.

Nachfolgend werden einige Ausführungsbeispiele anhand der Zeichnung näher erläutert. Es zeigen:

Fig. 1    ein Sattelzug mit einem Kippsattelauflieger in einer aufliegenden Position,

Fig. 2    ein Sattelzug mit einem Kippsattelauflieger in einer angekippten Position, und

Fig. 3    eine schematische Darstellung einer erfindungsgemäßen Vorrichtung.

In den Figuren sind gleiche oder funktional gleich wirkende Bauteile mit den gleichen Bezugszeichen versehen.

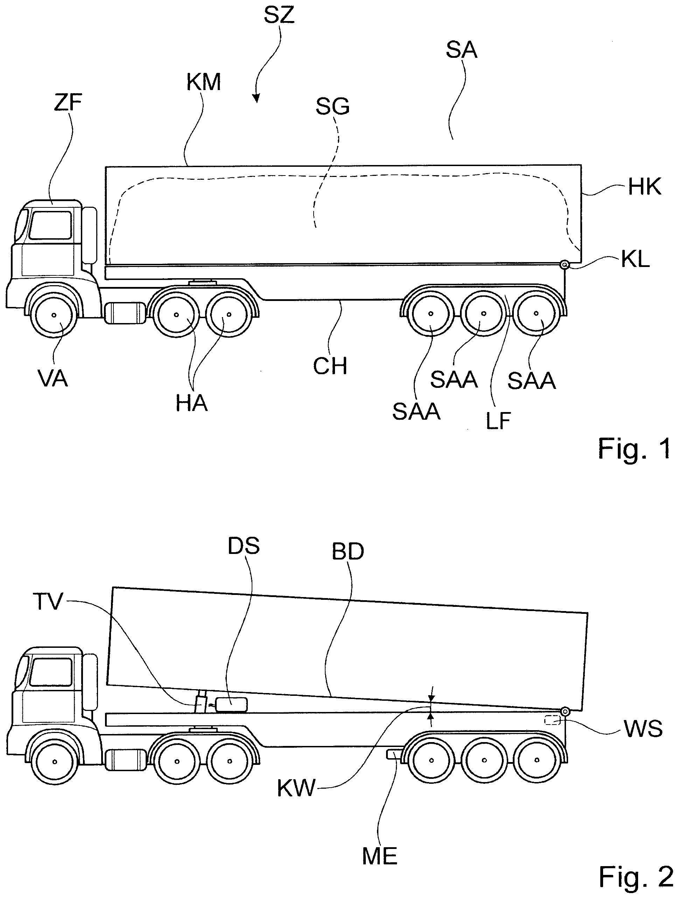

In Fig. 1 ist schematisch ein Sattelzug SZ gezeigt, das aus einem Zugfahrzeug ZF und einem Kippsattelanhänger in Form eines (Kipp-)Sattelaufliegers SA gebildet wird. Der Sattelauflieger SA kann in fachüblicher Weise mit dem Zugfahrzeug ZF verbunden sein, beispielsweise mittels eines nicht in Fig. 1 gezeigten Königszapfens und einer Kupplungsplatte.

In Fig. 1 ist das Zugfahrzeug ZF mit einer Vorderachse VA und zwei Hinterachsen HA gezeigt. Der Sattelauflieger SA weist drei Sattelaufliegerachsen SAA auf, die über eine Luftfederung LF mit einem in Form von Querträgern und Längsträgern ausgebildeten Chassis CH des Sattelaufliegers SA verbunden sind. Es versteht sich von selbst, dass die Erfindung nicht auf die gezeigte Konfiguration beschränkt ist, so dass Sattelzüge SZ mit einer unterschiedlichen Konfiguration von Achsen verwendet werden können.

Auf dem Chassis CH ist eine Kippmulde KM als Kippanordnung angeordnet, die zur Aufnahme von einer Ladung, die in Fig. 1 als Schüttgut SG angedeutet ist, vorgesehen ist. Die Kippmulde KM ist zur Entladung mit einer Heckklappe HK versehen. Zum Entladen des Schüttguts SG weist die Kippmulde darüber hinaus ein Kipplager KL als Kippachse auf, das in Fahrtrichtung gesehen am hinteren Ende des Sattelaufliegers SA angeordnet ist. Zum Ankippen der Kippmulde KM weist der Sattelauflieger SA eine Teleskopvorrichtung auf, die geeignet ist, die Kippmulde KM anzuheben, so dass zwischen der unteren Begrenzung der Kippmulde KM und dem Chassis CH ein bestimmter Aufstellwinkel einstellbar ist.

In Fig. 2 ist schematisch der Sattelzug SZ aus Fig. 1 gezeigt, nachdem die Kippmulde KM mittels der Teleskopvorrichtung TV angehoben wurde. Zwischen dem Boden BO der Kippmulde KM und dem Chassis CH stellt sich somit der Aufstellwinkel KW ein.

Um nun das Gewicht des Schüttguts SG bestimmen zu können, ist es vorgesehen, einen Aufstellwinkel KW beim Ankippen zu bestimmen. Zur Bestimmung des Aufstellwinkels KW ist ein Winkelsensor WS vorgesehen, der wie in Fig. 2 gezeigt ist, in der Nähe des Kipplagers KL angeordnet ist. Bei dem Winkelsensor WS kann es sich beispielsweise um einen Drehsensor handeln, der ähnlich wie ein Potentiometer eine Wegstrecke in ein elektrisches Signal umsetzt.

Es ist aber auch ebenso denkbar, den Winkelsensor als Beschleunigungssensor bereitzustellen, der die Bewegung der Kippmulde aufzeichnet, so dass aus den Beschleunigungswerten auf die aktuelle Position der Kippmulde KM zurückgeschlossen werden kann.

Des Weiteren könnte das Erreichen eines vorgegebenen Winkels detektieren werden, so dass der Aufstellwinkel KW selbst nicht gemessen wird sondern lediglich das Erreichen der voreingestellten Position angezeigt wird.

Des Weiteren ist es vorgesehen, die Aufrichtkraft beim Aufstellen der Kippmulde KM zu bestimmen. Dazu weist der Sattelauflieger SA einen Drucksensor DS auf, der den hydraulischen Druck innerhalb der Teleskopvorrichtung TV während des Ankippens der Kippmulde KM bestimmt. Typischerweise werden Teleskopvorrichtungen TV für Kippfahrzeuge KF mit einem Hydraulikdruck bis ungefähr 200 bar betrieben. Eine Genauigkeit der Druckbestimmung von 1 bar entspricht somit einer Genauigkeit der Bestimmung einer hydraulischen Kraft $F_H$ von weniger als 1 %.

Außerdem ist es vorgesehen, die eine Schwerpunktbestimmung der Kippmulde KM und der durch das Schüttgut SG gebildeten Ladung durchzuführen. Dazu ist die Luftfederung LF mit einer entsprechenden Messeinrichtung verbunden, die die pneumatische Druckkraft im Inneren der Luftdruckfederung LF bestimmt. Typischerweise werden Teleskopvorrichtungen TV für einen Sattelzug SZ mit einem Pneumatikdruck bis ungefähr 10 bar betrieben. Eine Genauigkeit der Druckbestimmung von 0,1 bar entspricht somit einer Genauigkeit der Bestimmung einer pneumatischen Kraft $F_P$ von mehr als 1 %. Die Messeinrichtung ME liefert ein Signal, das zur Schwerpunktbestimmung von Sattelauflieger SA und Schüttgut SG herangezogen werden kann. Dies setzt jedoch voraus, dass die Luftfederung LF nicht vollständig entleert wurde.

Zur Bestimmung des Ladungsgewichts wird nun die Kippmulde KM um einige Zentimeter angehoben, was einem Aufstellwinkel KW von weniger als 5° entspricht. Durch Bestimmung des pneumatische Drucks im Inneren der Luftdruckfederung LF, des hydraulischen Druck innerhalb der Teleskopvorrichtung TV und des Aufstellwinkels KW im angehobenen und im aufliegenden Zustand kann auf das Ladungsgewicht LG gemäß folgender Gleichung zurückgeschlossen werden, wobei das Leergewicht der Kippanordnung LGT beträgt:

$$LG = (F_P + F_H * \cos(KW)) - LGT.$$

Die Berechnung des Ladungsgewichts LG erfolgt somit über Messungen des Aufstellwinkels KW der Kippmulde KM, einer Aufrichtkraft beim Aufstellen der Kippmulde KM und einem Schwerpunkt der Kippmulde KM nebst Ladung SG.

Die erreichbare Genauigkeit ist dabei so hoch, dass ein auf diesen Messungen basierendes Wiegesystem eichfähig ist und beispielsweise seitens des Fahrers oder eines Fuhrunternehmens zur Abrechnung mit einem Lieferanten herangezogen werden kann.

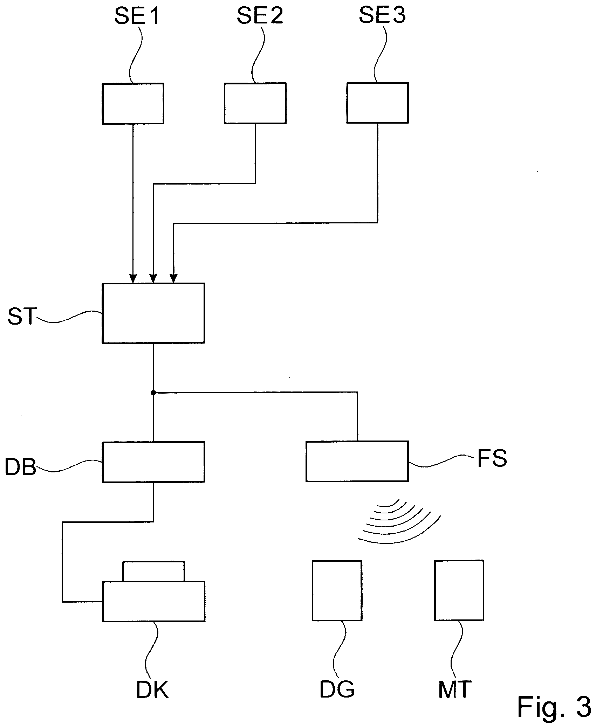

In Fig. 3 sind die bisher in Zusammenhang mit Fig. 1 und mit Fig. 2 beschriebenen Einzelkomponenten in einem schematischen Diagramm zusammen gefasst.

So ist eine erste Sensoreinheit SE1 zur Bestimmung des Aufstellwinkels KW vorgesehen, die den im Zusammenhang mit Fig. 1 beschriebenen Winkelsensor WS umfasst. Die erste Sensoreinheit SE1 ist somit geeignet, den Aufstellwinkel KW einer Kippanordnung beispielsweise die Kippmulde KM des Sattelaufliegers SA zu bestimmen.

Eine zweite Sensoreinheit SE2 umfasst den Drucksensor DS, wie in Fig. 2 beschrieben. Die zweite Sensoreinheit SE2 bestimmt somit eine Aufrichtkraft beim Aufstellen der Kippanordnung.

Eine dritte Sensoreinheit SE3 umfasst die im Zusammenhang mit Fig. 2 beschriebene Messeinrichtung ME und bestimmt einen Schwerpunkt der Kippanordnung.

Die Messwerte der ersten Sensoreinheit SE1, der zweiten Sensoreinheit SE2 und der dritten Sensoreinheit SE3 werden an eine Steuereinheit ST weiter gegeben, in der der Aufstellwinkel KW der Kippmulde KM, die Aufrichtkraft beim Aufstellen der Kippmulde KM und der Schwerpunkt der Kippmulde KM nebst Ladung SG verknüpft werden. Somit ist es möglich, beim Ankippen der Kippmulde KM das Ladungsgewicht LG zu bestimmen. Die unterschiedlichen Parameter Aufstellwinkel KW der Kippmulde KM, Aufrichtkraft beim Aufstellen der Kippmulde KM und Schwerpunkt der Kippmulde KM nebst Ladung SG werden nach dem Ankippen der Kippmulde KM um einige wenige Zentimeter bestimmt.

Die Verknüpfung der mit den drei Sensoreinheiten SE1 bis SE3 bestimmten Größen kann beispielsweise mittels einer Tabelle erfolgen, die für jede Kombination einen Eintrag enthält, der anzeigt, welcher Wert des Ladungsgewichts den gemessenen Größen entspricht. Folglich ist ein Anfahren einer Wiegestation beim Beladen des Sattelzugs SZ nicht mehr nötig, sondern es wird automatisch durch die Steuereinheit ST eine Gewichtsbestimmung durchgeführt.

Die Steuereinheit ST kann auch erweitert werden, um weitere, das Ladungsgewicht LG beeinflussende Parameter zu berücksichtigen. So kann auch der oben erwähnte Seitenneigungssensor mit der Steuereinheit ST verbunden sein oder das Leergewicht LGT als fester Parameter hinterlegt sein.

Ebenso ist es denkbar, aus den jeweiligen Werten der Sensoreinheiten ein Leergewicht der Kippanordnung zu bestimmen oder nach einem teilweisen Entladen der Kippanordnung ein Differenzgewicht der Kippanordnung zu bestimmen.

Die Parameter Aufstellwinkel KW der Kippmulde KM, Aufrichtkraft beim Aufstellen der Kippmulde KM und Schwerpunkt der Kippmulde KM nebst Ladung SG und gegebenenfalls weitere Parameter können auch anderen Systemen innerhalb und außerhalb des Sattelzugs zur Verfügung gestellt werden. Dazu ist es vorgesehen, dass die Messwerte Aufstellwinkel KW der Kippmulde KM, Aufrichtkraft beim Aufstellen der Kippmulde KM und Schwerpunkt der Kippmulde KM nebst Ladung SG an einen Datenbus DB übertragen werden.

Alternativ oder zusätzlich können die Messwerte Aufstellwinkel KW der Kippmulde KM, Aufrichtkraft beim Aufstellen der Kippmulde KM und Schwerpunkt der Kippmulde KM nebst Ladung SG an eine Funkschnittstelle FS übertragen werden, die beispielsweise nach einem Mobilfunkstandard (GSM, UMTS, LTE, EDGE oder ähnliche Protokolle) ausgeführt ist, so dass die Messwerte sowie eventuelle weitere Größen an ein Mobiltelefon MT übertragen werden können. Das Mobiltelefon MT kann beispielsweise von der Fahrerin oder dem Fahrer des Sattelzuges SZ während des Beladevorgangs des Kippsattelzuges als Kontrollanzeige verwendet werden.

Desweiteren kann es vorgesehen sein, die von der Steuereinheit ST empfangenen Messwerte Aufstellwinkel KW der Kippmulde KM, Aufrichtkraft beim Aufstellen der Kippmulde KM und Schwerpunkt der Kippmulde KM nebst Ladung SG über die Funkschnittstelle FS an ein externes Datenaufzeichnungsgerät zu übertragen. Das Datenaufzeichnungsgerät kann beispielsweise bei einem Hersteller des Sattelaufliegers SA oder bei dem Betreiber des Sattelaufliegers SA, z. B. einem Bauunternehmen oder ähnlichem, während des Betriebs des Sattelzuges SZ die Werte per Fernerfassung aufzeichnen. Außerdem ist es vorgesehen, den das Ladungsgewicht repräsentierenden Wert auf einem Drucker DK, beispielsweise über den Datenbus DB auszugeben. Ebenso kann es vorgesehen sein, dass das Datenaufzeichnungsgerät nicht über die Funkschnittstelle FS sondern über den Datenbus DB einen Bestandteil des Kippsattelaufliegers KSA oder des Zugfahrzeugs ZF bildet. Über eine entsprechende Schnittstelle kann das Datenerfassungsgerät dann bei Bedarf ausgelesen werden.

## Patentansprüche

1. Wiegesystem für eine Ladung eines Kippsattelzugs umfassend:

  - ein erste Sensoreinheit (SE1), die dazu ausgelegt ist über einen Winkelsensor (WS) oder einen Beschleunigungssensor einen Aufstellwinkel (KW) einer Kippanordnung (KM) eines Kippsattelaufliegers (SA) zu bestimmen,
  - eine zweite Sensoreinheit (SE2), die dazu ausgelegt ist über einen Drucksensor (DS) aus einem Hydraulikdruck einer Teleskopvorrichtung eine Aufrichtkraft beim Aufstellen der Kippanordnung (KM) zu bestimmen, **dadurch gekennzeichnet, dass**

  eine dritte Sensoreinheit (SE3) dazu ausgelegt ist über ein oder mehrere Luftdrucksensoren den Luftdruck innerhalb einer oder mehrerer Achsen der Luftdruckfederung (LF) des Kippsattelaufliegers (SA) zu bestimmen, und eine Steuereinheit (ST) dazu ausgelegt ist aus dem Aufstellwinkel, der Aufrichtkraft und dem Luftdruck innerhalb einer oder mehrerer Achsen der Luftdruckfederung (LF) des Kippsattelaufliegers (SA)in einer aufgestellten Position der Kippanordnung (KM) einen Wert zu bestimmen, der einem Gewicht einer Ladung in der Kippanordnung (KM) entspricht.

2. Wiegesystem nach Anspruch 1, bei der die aufgestellte Position einem Aufstellwinkel von weniger als 10°, vorzugsweise weniger als 5° entspricht.

3. Wiegesystem nach einem der Ansprüche 1 bis 2, bei dem die dritte Sensoreinheit (SE3) ein Erfassungsmittel zur Bestimmung der Ladungsverteilung umfasst.

4. Wiegesystem nach einem der Ansprüche 1 bis 3, bei dem der Hydraulikdruck innerhalb der Teleskopvorrichtung (TV) zum Aufstellen der Kippanordnung (KM) mit einer Genauigkeit von 1 bar oder höher bestimmbar ist.

5. Wiegesystem nach einem der Ansprüche 1 bis 4, bei dem der pneumatische Druck mit einer Genauigkeit von 0,1 bar oder höher bestimmbar ist.

6. Wiegesystem nach einem der Ansprüche 1 bis 5, bei dem eine weitere Sensoreinheit vorgesehen ist, die dazu ausgelegt ist eine Neigung des Kippsattelaufliegers (SA) bezüglich einer Fahrbahn zu bestimmen.

7. Wiegesystem nach einem der Ansprüche 1 bis 6, das mit einem Datenaufzeichnungsgerät (DG) verbunden ist, das dazu ausgelegt ist die Werte der Sensoreinheiten und/oder der Steuereinheit aufzuzeichnen.

8. Wiegesystem nach einem der Ansprüche 1 bis 7, das mit einer Funkschnittstelle (FS) verbunden ist, die geeignet ist, die Werte der Sensoreinheiten und/oder der Steuereinheit weiterzuleiten.

9. Wiegesystem nach Anspruch 8, bei der die Funkschnittstelle (FS) nach einem Mobilfunkstandard, vorzugsweise einem GSM-Standard oder einem UMTS-Standard oder einem LTE-Standard ausgeführt ist.

10. Wiegesystem nach einem der Ansprüche 1 bis 9, das mit einer Ausgabeeinheit, vorzugsweise einem Drucker verbunden ist, die geeignet ist, die Werte der Sensoreinheiten und/oder der Steuereinheit auszugeben.

11. Verfahren zum Wiegen einer Ladung eines Kippsattelzugs, insbesondere eines mit Schüttgut beladenen Kippsattelzugs (SZ), bei dem folgende Schritte ausgeführt werden:

  - Bereitstellen eines Kippsattelaufliegers (SA), bei dem über einen Winkelsensor (WS) oder einen Beschleunigungssensor einen Aufstellwinkel (KW) einer Kippanordnung (KM) eines Kippsattelaufliegers (SA) bestimmt wird, über einen Drucksensor (DS) aus einem Hydraulikdruck einer Teleskopvorrichtung eine Aufrichtkraft beim Aufstellen der Kippanordnung (KM) bestimmt wird, über ein oder mehrere Luftdrucksensoren den Luftdruck innerhalb einer oder mehrerer Achsen der Luftdruckfederung (LF) des Kippsattelaufliegers (SA) bestimmt wird,

- Beladen der Kippanordnung (SA) mit einer Ladung (SG);
- Aufstellen der Kippanordnung (KM) um den Aufstellwinkel (KW) und Bestimmen der Aufrichtkraft und des Luftdrucks der Luftdruckfederung (LF) in einer aufgestellten Position; und
- Ausgeben eines Werts, der einem Gewicht einer Ladung in der Kippanordnung (KA) entspricht, wobei das Ladungsgewicht aus dem Aufstellwinkel (KW) der Aufrichtkraft und des Luftdrucks der Luftdruckfederung (LF) in der aufgestellten Position der Kippanordnung (KM) bestimmt wird.

12. Verfahren nach Anspruch 11, bei dem vor dem Beladen der Kippanordnung (KA) die Schritte Aufstellen der Kippanordnung (KA) sowie Bestimmen der Aufrichtkraft und des Luftdrucks der Luftdruckfederung (LF) durchgeführt werden, um aus den jeweiligen Werten der Sensoreinheiten ein Leergewicht der Kippanordnung (KA) zu bestimmen.

13. Verfahren nach Anspruch 12, bei dem nach einem teilweisen Entladen der Kippanordnung (KA) die Schritte Aufstellen der Kippanordnung (KA) sowie Bestimmen der Aufrichtkraft und des Luftdrucks der Luftdruckfederung (LF) durchgeführt werden, um aus den jeweiligen Werten der Sensoreinheiten ein Differenzgewicht der Kippanordnung (KA) zu bestimmen.

14. Verfahren nach Anspruch 11 bis 13, bei dem alternativ zur Bestimmung des Schwerpunkts der Kippanordnung (KA) eine Erfassung der Ladungsverteilung vorgenommen wird.

15. Kippsattelanhänger, der ein Wiegesystem nach einem der Ansprüche 1 bis 10 aufweist.

16. Computerlesbares Medium, auf dem Befehle abgespeichert sind, die es einem oder mehreren Rechnern ermöglichen, ein Verfahren nach einem der Ansprüche 11 bis 14 auszuführen.

## Claims

1. Weighing system for a load of an articulated tipper vehicle comprising:

   - a first sensor unit (SE1) which is configured to determine an angle of elevation (KW) of a tipper arrangement (KM) of a tipper semi-trailer (SA) by means of an angle sensor (WS) or an acceleration sensor,
   - a second sensor unit (SE2) which is configured to determine a raising force during the raising of the tipper arrangement (KM) from a hydraulic pressure of a telescopic device by means of a pressure sensor (DS),

   **characterized in that**
   a third sensor unit (SE3) is configured to determine, by means of one or more air pressure sensors, the air pressure within one or more axes of the air suspension system (LF) of the tipper semi-trailer (SA), and a control unit (ST) is configured to determine, from the angle of elevation, the raising force and the air pressure within one or more axes of the air suspension system (LF) of the tipper semi-trailer (SA) in a raised position of the tipper arrangement (KM), a value which corresponds to a weight of a load in the tipper arrangement (KM).

2. Weighing system according to Claim 1, in which the raised position corresponds to an angle of elevation of less than 10°, preferably of less than 5°.

3. Weighing system according to one of Claims 1 to 2, in which the third sensor unit (SE3) comprises a sensing means for determining the load distribution.

4. Weighing system according to one of Claims 1 to 3, in which the hydraulic pressure within the telescopic device (TV) for raising the tipper arrangement (KM) can be determined with an accuracy of 1 bar or higher.

5. Weighing system according to one of Claims 1 to 4, in which the pneumatic pressure can be determined with an accuracy of 0.1 bar or higher.

6. Weighing system according to one of Claims 1 to 5, in which a further sensor unit is provided which is configured to determine an inclination of the tipper semi-trailer (SA) with respect to an underlying surface.

7. Weighing system according to one of Claims 1 to 6, which is connected to a data recording unit (DG) which is configured to record the values of the sensor units and/or of the control unit.

8. Weighing system according to one of Claims 1 to 7, which is connected to a radio interface (FS) which is suitable for passing on the values of the sensor units and/or of the control unit.

9. Weighing system according to Claim 8, in which the radio interface (FS) is embodied according to a mobile radio standard, preferably a GSM standard or a UMTS standard or an LTE standard.

10. Weighing system according to one of Claims 1 to 9, which is connected to an output unit, preferably a printer, which is suitable for outputting the values of the sensor units and/or of the control unit.

11. Method for weighing a load of a tipper semi-trailer, in particular of a tipper semi-trailer (SZ) which is loaded with bulk material and in which the following steps are carried out:

- making available a tipper semi-trailer (SA), in which an angle of elevation (KW) of a tipper arrangement (KM) of a tipper semi-trailer (SA) is determined by means of an angle sensor (WS) or an acceleration sensor, a raising force during the raising of the tipper arrangement (KM) is determined from a hydraulic pressure of a telescopic device by means of a pressure sensor (DS), and the air pressure within one or more axes of the air suspension system (LF) of the tipper semi-trailer (SA) is determined by means of one or more air pressure sensors,
- loading of the tipper arrangement (SA) with a load (SG);
- raising the tipper arrangement (KM) by the angle of elevation (KW), and determining the raising force and the air pressure of the air suspension system (LF) in a raised position; and
- outputting a value which corresponds to a weight of a load in the tipper arrangement (KA), wherein the laden weight is determined from the angle of elevation (KW), the raising force and the air pressure of the air suspension system (LF) in the raised position of the tipper arrangement (KM).

12. Method according to Claim 11, in which, before the loading of the tipper arrangement (KA), the steps of raising the tipper arrangement (KA) and determining the raising force and the air pressure of the air suspension system (LF) are carried out in order to determine an unladen weight of the tipper arrangement (KA) from the respective values of the sensor units.

13. Method according to Claim 12, in which after partial discharging of the tipper arrangement (KA) the steps of raising the tipper arrangement (KA) and determining the raising force and the air pressure of the air suspension system (LF) are carried out, in order to determine a differential weight of the tipper arrangement (KA) from the respective values of the sensor units.

14. Method according to Claims 11 to 13, in which the load distribution is detected as an alternative to determining the centre of gravity of the tipper arrangement (KA).

15. Tipper semi-trailer, which has a weighing system according to one of Claims 1 to 10.

16. Computer-readable medium on which commands are stored which permit one or more computers to carry out a method according to one of Claims 11 to 14.

**Revendications**

1. Système de pesage de la charge d'un véhicule à benne basculante comprenant :

- une première unité à capteur (SE1) conçue pour déterminer, au moyen d'un capteur d'angle (WS) ou d'un capteur d'accélération, un angle de levage (KW) d'un dispositif de basculement (KM) d'une semi-remorque à benne basculante (SA),
- une deuxième unité à capteur (SE2) conçue pour déterminer une force de relevage lors du levage du dispositif de basculement (KM) au moyen d'un capteur de pression (DS) à partir d'une pression hydraulique d'un dispositif télescopique,

**caractérisé en ce qu'**une troisième unité à capteur (SE3) est conçue pour déterminer la pression d'air dans un ou plusieurs essieux de la suspension à air comprimé (LF) du semi-remorque à benne basculante (SA) au moyen d'un ou plusieurs capteurs de pression d'air, et une unité de commande (ST) est conçue pour déterminer une valeur correspondant à un poids d'une charge dans le dispositif de basculement (KM) en position relevée du dispositif de basculement (KM) à partir de l'angle de levage, de la force de relevage et de la pression d'air dans un ou plusieurs essieux de la suspension à air comprimé (LF) du semi-remorque à benne basculante (SA).

2. Système de pesage selon la revendication 1, dans lequel la position relevée correspond à un angle de levage inférieur à 10°, et de préférence inférieur à 5°.

3. Système de pesage selon l'une quelconque des revendications 1 et 2, dans lequel la troisième unité à capteur (SE3) comprend un moyen de détection destiné à déterminer la répartition de la charge.

4. Système de pesage selon l'une quelconque des revendications 1 à 3, dans lequel la pression hydraulique à l'intérieur du dispositif télescopique (TV) destiné au levage du dispositif de basculement (KM) peut être déterminée avec une précision de 1 bar ou plus.

5. Système de pesage selon l'une quelconque des revendications 1 à 4, dans lequel la pression pneumatique peut être déterminée avec une précision de 0,1 bar ou plus.

6. Système de pesage selon l'une quelconque des revendications 1 à 5, dans lequel il est prévu une autre unité à capteur qui est conçue pour déterminer l'inclinaison du semi-remorque à benne basculante (SA) par rapport à une chaussée.

7. Système de pesage selon l'une quelconque des revendications 1 à 6, qui est relié à un enregistreur de données (DG) conçu pour enregistrer les valeurs des unités à capteurs et/ou de l'unité de commande.

8. Système de pesage selon l'une quelconque des revendications 1 à 7, qui est relié à une interface radio (FS) permettant de transmettre les valeurs des unités à capteurs et/ou de l'unité de commande.

9. Système de pesage selon la revendication 8, dans lequel l'interface radio (FS) est conçue conformément à une norme radio mobile, de préférence une norme GSM ou une norme UMTS ou une norme LTE.

10. Système de pesage selon l'une quelconque des revendications 1 à 9, qui est relié à une unité de sortie, de préférence une imprimante, capable d'imprimer les valeurs des unités à capteur et/ou de l'unité de commande.

11. Procédé de pesage de la charge d'un semi-remorque à benne basculante, en particulier d'un semi-remorque à benne basculante chargé de produits en vrac, dans lequel les étapes suivantes sont effectuées :

- fournir un semi-remorque à benne basculante (SA), dans lequel un angle de levage (KW) d'un dispositif de basculement (KM) d'un semi-remorque à benne basculante (SA) est déterminé au moyen d'un capteur d'angle (WS) ou d'un capteur d'accélération, une force de relevage est déterminée au moyen d'un capteur de pression (OS) à partir d'une pression hydraulique d'un dispositif télescopique lors du levage du dispositif de basculement (KM), et la pression d'air dans un ou plusieurs essieux de la suspension à air comprimé (LF) du semi-remorque à benne basculante (SA) est déterminée par un ou plusieurs capteurs de pression d'air,

- charger le dispositif de basculement (SA) avec une charge (SG) ;
- lever le dispositif de basculement (KM) selon l'angle de levage (KW) et déterminer la force de relevage et la pression d'air de la suspension à air comprimé (LF) en position relevée ; et
- fournir en sortie une valeur correspondant à un poids d'une charge dans le dispositif de basculement (KA), dans lequel le poids de charge est déterminé à partir de l'angle de levage (KW), de la force de relevage et de la pression d'air de la suspension à air comprimé (LF) à la position relevée du dispositif de basculement (KM) .

12. Procédé selon la revendication 11, dans lequel, avant de charger le dispositif de basculement (KA), les étapes de levage du dispositif de basculement (KA) et de détermination de la force de relevage et de la pression d'air de la suspension à air comprimé (LF) sont exécutées afin de déterminer un poids à vide du dispositif de basculement (KA) à partir des valeurs respectives des unités à capteurs.

13. Procédé selon la revendication 12, dans lequel, après de décharger partiellement le dispositif de basculement (KA), les étapes de levage du dispositif de basculement (KA) et de détermination de la force de relevage et de la pression d'air de la suspension à air comprimé (LF) sont exécutées afin de déterminer une différence de poids du dispositif de basculement (KA) à partir des valeurs respectives des unités à capteurs.

14. Procédé selon la revendication 11 à 13, dans lequel une détection de la répartition des charges est effectuée au lieu de déterminer le centre de gravité du dispositif de basculement (KA).

15. Semi-remorque à benne basculante comportant un système de pesage selon l'une quelconque des revendications 1 à 10.

16. Support lisible par ordinateur sur lequel sont stockées des instructions qui permettent à un ou plusieurs ordinateurs de mettre en oeuvre un procédé selon l'une quelconque des revendications 11 à 14.

SZ

KM

ZF

SG

SA

HK

KL

VA

HA

CH

SAA

SAA

LF

SAA

Fig. 1

DS

BD

TV

WS

KW

ME

Fig. 2

SE1    SE2    SE3

ST

DB                    FS

DK        DG        MT

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100211356 A1
- WO 2009156726 A1
- DE 3629244 A1